# EUROPEAN PATENT SPECIFICATION

(11) **EP 4 635 851 B1**
(45) Date of publication and mention of the grant of the patent: **14.10.2026**
(21) Application number: 24170835.3
(22) Date of filing: 17.04.2024
(51) Int. Cl.: B64D 25/00, B64D 37/30, B64D 37/32, B64C 1/10, B64C 25/00, B64D 27/40

(54) **AIRCRAFT ASSEMBLY AND AIRCRAFT**
FLUGZEUGANORDNUNG UND FLUGZEUG
ASSEMBLAGE D'AÉRONEF ET AÉRONEF

(43) Date of publication of application: 22.10.2025
(73) Proprietor: Airbus Operations GmbH, 21129 Hamburg (DE)
(72) Inventor: Siemann, Martin, 21129 Hamburg (DE); Kirtil, Erkan, 21129 Hamburg (DE)
(74) Representative: Marschall, Stefan

(56) References cited:
- EP-A1- 2 942 281
- EP-B1- 2 886 444
- GB-A- 2 166 202
- US-A1- 2015 102 040
- US-B2- 11 034 447
- US-B2- 9 387 917

## Description

The present invention concerns an aircraft assembly, which in particular may comprise (or be) an aircraft's fuselage. The invention further concerns an aircraft comprising such aircraft assembly.

Aircraft typically comprise, inter alia, a fuselage with a shell encompassing a passenger cabin and/or a cargo hold, and encasing various constituents such as one or more fuel tank/s. In potential crash scenarios, the fuselage may rupture, in particular may occur at locations where there is a rather sudden change of stiffness or some type of local load introduction, such as behind a cockpit section, forward or aft the centre wing box and/or close to the empennage.

Certification specifications require to avoid fuselage breakage in particular near tanks.

Different positions are known for the tanks, depending on a respective type and design of the aircraft.

The requirements were defined with respect to conventionally powered aircraft, where the respective fuel may be an aviation gasoline or a jet fuel, for instance.

However, in order to achieve a considerable emission reduction, alternative propulsion systems for aircraft have been researched for. In this respect, hydrogen/electric aircraft engines, any propulsion engine, which includes piston engines, turbine engines of any architecture, and fuel cell powered electrical propulsion motors have emerged as a promising possibility, for instance. In particular, turbo fans and fuel cells/ electric engines respectively powered by hydrogen are being developed as aircraft engines.

There are two basic tank variants: integral and non-integral tanks. Integral tank comprise tank boundaries that form at least a part of the airframe and are thus load-carrying, whereas non-integral tanks are installed in the airframe and comprise tank boundaries/walls that are not part of the airframe and thus they are not load-carrying.

Because of the large size of hydrogen tanks necessary for such hydrogen propulsion, a fuselage containing such hydrogen tank may break, in particular in front of, behind and/or between such hydrogen tanks (respectively with regard to a designated direction of normal flight).

In GB 2 166 202 A a propeller blade is shown whose tip is secured to a blade root via passive fibres under normal operation. In a case of structural failure of the blade, the fibres are loaded and a separation of tips from the root is prevented.

US 9 387 917 B2 shows a decompression means for an aircraft. It has a lid which closes a decompression opening under normal operation conditions and which is secured to a frame via rope-like elements. As long as the lid is closed, the rope-like elements are unloaded.

EP 2 942 281 A1 describes a tank whose shape is supported by internal cables. The cables create an inwards force to oppose an outward bowing of the skins that may be caused by impact of a projectile with the fuel tank.

EP 2 886 444 B1 shows a foldable pressure bulkhead for an aircraft whose pressurizing portion stays in shape via two cables.

US 11 034 447 B2 discloses an unmanned aerial vehicle having wings whose tips can be detached from their wing roots. In the detached state, the wing tips are fixed to the wing roots via loaded tethers.

US 2015/102040 A1 shows a helicopter tank having a flexible tank which is shaped via cables. The cables extend between the tank and a structure of the helicopter and are loaded under normal operation.

It is an object of the present invention to provide an aircraft assembly accomplishing an improved safety. It is a further object to provide an aircraft comprising such aircraft assembly.

The object is achieved with an aircraft assembly according to claim 1 and with an aircraft according to claim 7. Advantageous embodiments are disclosed in the dependent claims, the description, and the drawings.

An aircraft assembly comprises two or more aircraft components which are connected with each other by means of one or various tether/s configured to delimit a drifting apart of the aircraft components in case of a breakage of the aircraft assembly, the at least two aircraft components including at least one fuel tank. The at least one fuel tank is configured as a pressure vessel for containing liquid hydrogen and at least one of the one or various tether/s is arranged to be slack within the undamaged aircraft assembly.

The present invention thus inhibits that said connected aircraft components separate and move in an uncontrolled manner if the aircraft assembly breaks. This minimises the risk of secondary impacts which otherwise might occur, when the aircraft comprising the aircraft assembly ruptures, in particular, when a shell thereof breaks up. For instance, when the at least two aircraft components belong to an aft portion of a fuselage of the aircraft, the connection thereof by means of the tether/s facilitates avoiding that one of said aircraft components blocks an aft door of the fuselage. Accordingly, in particular the aft door's capability to serve as an emergency evacuation path for passengers and/or crew can be maintained. Moreover, said connection may obviate that, in a potential crash scenario, one of said components penetrates into a passenger cabin or the aircraft's cockpit, and/or that it is displaced into an environment of the aircraft, which might cause additional risks. In particular, the tether/s thus is/are safety tether/s.

As long as the aircraft assembly is undamaged, the one tether or - if the aircraft assembly comprises various tethers - at least one of the tethers is preferably arranged to be slack (thus, not taut) between the two or more aircraft components it connects. Accordingly, the (at least one) tether is preferably loaded only in case of a potential crash scenario where a rupture between components of the airframe occurs, but unloaded during normal operations (flight and ground loads) of the aircraft comprising the aircraft assembly. Thereby, a durability of the (at least one) tether and of respective mounts and/or fastening means is improved.

Accordingly, the tethers do only act when there is a rupture between connected components, e. g. a fuselage break. They do not form part of the primary structure or contribute to carrying loads during normal operations nor during potential crash scenarios where there is no rupture between connected components.

According to advantageous embodiments of the present invention, the aircraft assembly includes at least a portion of a fuselage of the aircraft. Additionally or alternatively, it may comprise at least a portion of at least one wing, at least one engine, at least a portion of a tail, an empennage, and/or an undercarriage, respectively of the aircraft.

At least one of said two or more aircraft components may be a structural component of the aircraft. For example, such structural component may be a section of a fuselage of the aircraft, in particular a section of a shell of the fuselage, even more specifically, a section of a shell of an aft portion of the fuselage. According to advantageous embodiments, such portion may form part of a fuselage reinforcement structure of the aircraft.

The two or more aircraft components connected with each other by means of one or various tether/s may comprise at least one pressure bulkhead, at least one engine pylon and/or at least one landing gear of the aircraft. In particular, the present invention thus advantageously facilitates a retention of such items of mass.

As further possibilities, at least one of the two or more aircraft components may belong to a fuel distribution system of the aircraft, in particular to a pipe system thereof. In such case, the tethers may advantageously help to avoid rupture of components of the fuel distribution systems, as they limit their elongation in case of a potential rupture between components of the airframe.

In particular, the two or more aircraft components which are connected with each other by means of the tether/s may be of the same type, or they may be of different types.

For instance, they may both be a structural component of the aircraft (in particular, a structural component of one of the above-mentioned kinds), or both be a fuel tank of the aircraft.

As an example of said aircraft components being of different types, one of said two of more aircraft components may be a structural component (e.g., of one of the above-mentioned kinds), a pressure bulkhead, or an engine pylon of the aircraft.

As is to be understood, the aircraft assembly according to the present invention may additionally or alternatively comprise, as said aircraft components connected by means of the tether/s, further combinations, in particular of the mentioned aircraft components exemplarily mentioned herein.

The at least one fuel tank may advantageously be arranged in an aft portion of the aircraft's fuselage, for instance, in a caudal tandem configuration with a/the other fuel tank.

According to advantageous embodiments, the aircraft assembly may further comprise at least a portion of a pipe and supply system configured to supply fuel contained in the at least one fuel tank to one or more (main) propulsion engines of the aircraft and/or to an auxiliary power unit possibly further comprised by the aircraft or even the fuselage.

The one tether or - if applicable - at least one of the various tethers (by means of which the two or more aircraft components are connected with each other) may be fixed to at least one of the aircraft components with at least one further element in-between. For instance, such element may be a fixation element which may be attached to a respective one of the aircraft components and to which the (at least one) tether may be fastened. Accordingly, a respective connection of the aircraft components (with each other) may be formed by the tether/s in conjunction with said at least one element.

Additionally or alternatively, within a shell the aircraft assembly may comprise, the tether or - if applicable - at least one of the various tethers may be at least partially bare (i.e., exposed/ without a casing). For instance, it may run along at least one tank attachment of a fuel tank of the aircraft, in particular along a tank attachment of at least one fuel tank being (in respective embodiments) one of said aircraft components as mentioned above. Such embodiments facilitate a particular simple installation.

According to advantageous embodiments of the present invention, the one tether or - if the assembly comprises various tethers - at least one of the tethers is at least partially made of polymere fibres, such as aramids or polyethylene, carbon fibres, such as Kevlar, or inorganic fibres such as glass or ceramic. Thereby, the tether/s may exhibit a high tensile strength and, nevertheless, a low mass.

In what follows, an exemplary embodiment of the present invention is explained with respect to the accompanying drawings. As is to be understood, the various elements and components are depicted as examples only, may be facultative and/or combined in a manner different than that depicted, provided that this combination falls within the scope of the appended claims. Reference signs for related elements are used comprehensively and not necessarily defined again for both figures.

Shown are schematically in
- Fig. 1a:: an aircraft assembly according to an exemplary embodiment of the present invention in an undamaged state;
- Fig. 1b:: the aircraft assembly of Figure 1a after a potential crash scenario where a rupture between components of the airframe has occurred; and
- Fig. 2:: an aircraft assembly according to another exemplary embodiment of the present invention in an undamaged state.

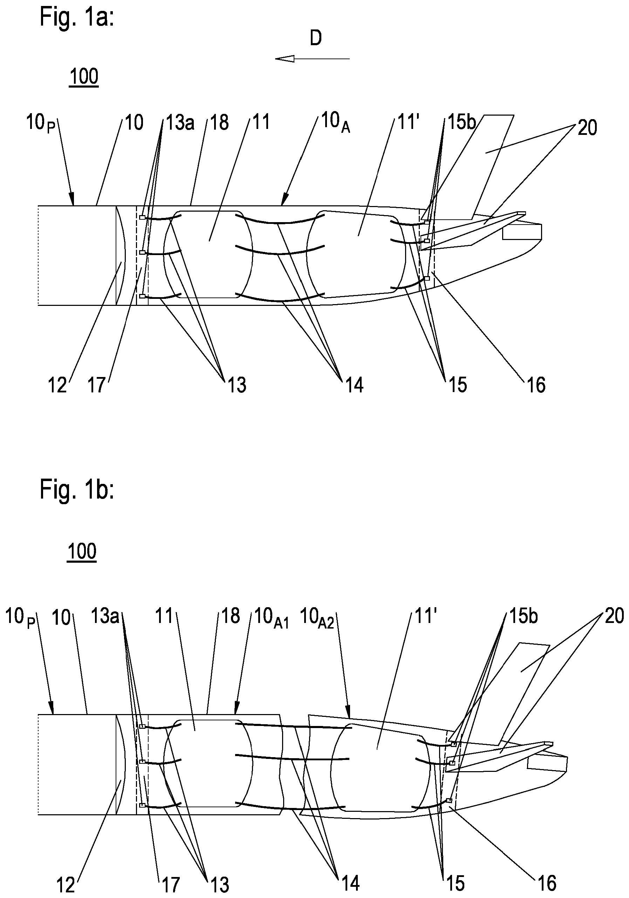

Figures 1a and 1b illustrate an exemplary aircraft assembly 100 according to the present invention in an undamaged and in a damaged state, respectively. In this embodiment, the aircraft assembly 100 comprises a part of a fuselage 10 of an aircraft, the fuselage 10 including an unpressurised aft portion 10_{A} and a part of a passenger cabin 10_{P}, which are separated from each other by a pressure bulkhead 12. Furthermore, the aircraft assembly comprises an empennage 20 which is attached to the fuselage's aft portion 10_{A}.

The unpressurised aft portion 10_{A} comprises two fuel tanks 11, 11' arranged in caudal tandem configuration. The fuel tanks 11, 11' are hydrogen tanks, i.e., pressure vessels configured to contain liquid hydrogen. Preferably, the fuel tanks 11, 11' are connected or configured to be connected, by means of a pipe and supply system (not shown), with one or more (main) propulsion engines of the aircraft and/or with an auxiliary power unit possibly further comprised by the aircraft.

The aircraft assembly 100 further comprises a plurality of tethers 13, 14, 15 each of which is attached to two aircraft components which thus are connected with each other by means of the respective tethers. Indeed, a portion 17 of the fuselage's shell 18 (e.g., a portion of a fuselage reinforcement structure) in the proximity of the pressure bulkhead 12 and a first fuel tank 11 adjacent thereto constitute a first pair of such aircraft components which are connected to each other by means of a plurality of tethers 13, the connection comprising fixation elements 13a respectively attached to said portion 17 of the shell 18 of the fuselage. The first fuel tank 11 and the second fuel tank 11' (constituting a second pair of aircraft components) are connected to each other by means of a plurality of tethers 14. Finally, the second fuel tank 11' and a section 16 of the shell 18 aft the fuel tank 11' make up a third pair of aircraft components which are connected to each other by means of a plurality of tethers 15, wherein the connection comprises fixation elements 15b respectively attached to said section 16 of the shell 18.

As can be seen in Figure 1a, in the undamaged state, the tethers 13, 14, 15 are arranged to be slack (and thus unloaded) between the two or more aircraft components they respectively connect.

By contrast, in the damaged state shown in Figure 1b, in which the aft portion 10_{A} of the fuselage 10 is broken into pieces 10_{A1} and 10_{A2}, some of the tethers 15 are taut due to the pieces 10_{A1}, 10_{A2} having moved apart. Indeed, in the exemplary case depicted, the rupture has caused the piece 10_{A2} to bend downwards relative to the piece 10_{A1}, such that the upmost one of tethers 15 has been loaded and thereby inhibits a further drifting apart of the fuel tanks 11, 11'. Respective mounts (not shown in the figures) fastening the fuel tanks 11, 11' to the shell 18 may further prevent, in combination with the tethers 15 and the fuel tanks 11, 11', that the respective shell portions of the pieces 10_{A1}, 10_{A2} further separate from each other.

Therefore, safety of the aircraft comprising the aircraft assembly 100 is increased in a potential crash scenario.

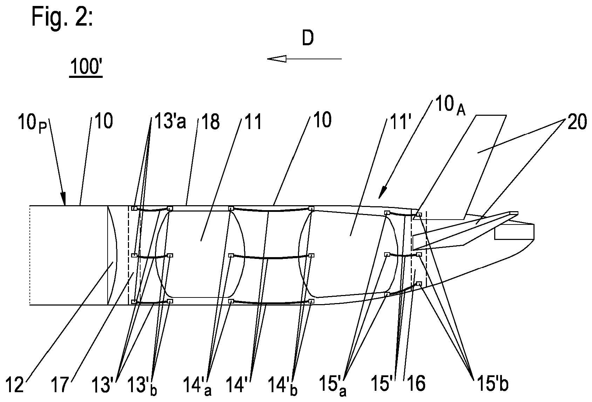

In Figure 2, an aircraft assembly 100' according to another embodiment of the present invention is illustrated in an undamaged state. The aircraft assembly 100' differs from the embodiment shown in Figures 1a, 1b in that its tethers 13', 14', 15' are not fastened to the tanks 11, 11'. Instead, they are connected to respective structural components of the shell 18, the structural components respectively surrounding one of the tanks 11, 11'. For example, such structural component in this case may be a frame (not shown) comprised by a fuselage reinforcement structure of the shell 18. The respective connection comprises fixation elements 13'a, 13'b, 14'a, 14'b, 15'a, 15'b (such as fittings) which are respectively attached to the structural components and to which the tethers 13', 14', 15' are fastened.

As is to be understood, the present invention is not restricted to the embodiments shown in the figures. In particular, an aircraft assembly according to the present invention may comprise both at least one tether having at least one end which is connected to a tank (as shown in Figure 1a), and at least one tether which is connected, at both of its ends, to a structural component, as illustrated on Figure 2.

Disclosed is an aircraft assembly 100 comprising two or more aircraft components 11, 11', 16, 17 which are connected with each other by means of one or various tether/s 13, 13', 14, 14', 15, 15'. The tether/s is/are configured to delimit a drifting apart of the aircraft components 11, 11', 16, 17 in case of a breakage of the aircraft assembly.

Further disclosed is an aircraft comprising such aircraft assembly 100, 100'.

### Reference signs

- 10: fuselage
- 10_{A}: aft portion of the fuselage 10
- 10_{A1}, 10_{A2}: pieces of the aft portion 10_{A}
- 10_{P}: passenger cabin of the fuselage 10

- 11, 11': fuel tank
- 12: pressure bulkhead
- 13, 13': tethers
- 13a, 13'a, 13'b: fixation element
- 14, 14': tether
- 14'a, 14'b: fixation element
- 15: tether
- 15b, 15'a, 15'b: fixation element
- 16: shell section/ structural component
- 17: portion of fuselage shell/ structural component

- 20: empennage

- 100, 100': aircraft assembly

## Claims

1. Aircraft assembly (100) comprising two or more aircraft components (11, 11', 16, 17) which are connected with each other by means of one or various tether/s (13, 13', 14, 14', 15, 15') configured to delimit a drifting apart of the aircraft components (11, 11', 16, 17) in case of a breakage of the aircraft assembly, wherein the at least two aircraft components include at least one fuel tank (11, 11'),
**characterized in that**
the at least one fuel tank is configured as a pressure vessel for containing liquid hydrogen,
wherein at least one of the one or various tether/s (13, 13', 14, 14', 15, 15') is arranged to be slack within the undamaged aircraft assembly.

2. Aircraft assembly according to claim 1, wherein the at least two aircraft components include
- at least one structural component (16, 17), and/or
- at least one pressure bulkhead (12), and/or
- at least one engine pylon, and/or
- at least one landing gear.

3. Aircraft assembly according to claims 1 or 2, wherein the at least one fuel tank (11') configured as a pressure vessel for containing liquid hydrogen
- is connected, by means of at least one of the one or various tether/s (14), with a further fuel tank (11) configured as a pressure vessel for containing liquid hydrogen comprised by the aircraft assembly; and/or
- is connected, by means of at least one of the one or various tether/s (13, 15), with a structural component (17, 16) comprised by the aircraft assembly.

4. Aircraft assembly according to one of claim 1 to 3, wherein within a shell comprised by the aircraft assembly, at least one of the one or various tether/s is at least partially bare, i.e. exposed without a casing.

5. Aircraft assembly according to one of the preceding claims, wherein a connection of the two or more aircraft components (11, 11', 12, 16) with each other comprises, further to the one or various tether/s (13, 13', 14, 14', 15, 15'), at least one fixation element (13a, 13'a, 13'b, 14'a, 14'b, 15b, 15'a, 15'b) attached to one or more of the aircraft components.

6. Aircraft assembly according to one of the preceding claims, wherein at least one of the tether/s (13, 13', 14, 14', 15, 15') is at least partially made of polymere fibres, such as aramids or polyethylene, carbon fibres, such as Kevlar, or inorganic fibres such as glass or ceramic.

7. Aircraft comprising an aircraft assembly (100, 100') according to one of the preceding claims.

## Patentansprüche

1. Luftfahrzeugbaugruppe (100), die zwei oder mehr Luftfahrzeugkomponenten (11, 11', 16, 17) umfasst, die miteinander mittels eines oder mehrerer Halteseile (13, 13', 14, 14', 15, 15') verbunden sind, die dazu eingerichtet sind, ein Auseinanderdriften der Luftfahrzeugkomponenten (11, 11', 16, 17) im Fall eines Brechens der Luftfahrzeugbaugruppe zu verhindern, wobei die mindestens zwei Luftfahrzeugkomponenten mindestens einen Treibstofftank (11, 11') umfassen,
**dadurch gekennzeichnet, dass** der mindestens eine Treibstofftank als ein Druckbehälter zur Aufnahme von Flüssigwasserstoff ausgelegt ist, wobei mindestens eines von dem einen oder den mehreren Halteseilen (13, 13', 14, 14', 15, 15') so angeordnet ist, dass es Durchhang innerhalb der unbeschädigten Luftfahrzeugbaugruppe aufweist.

2. Luftfahrzeugbaugruppe nach Anspruch 1, wobei die mindestens zwei Luftfahrzeugkomponenten Folgendes umfassen:
- mindestens eine Strukturkomponente (16, 17), und/oder
- mindestens ein Druckschott (12), und/oder
- mindestens eine Triebwerkaufhängung, und/oder
- mindestens ein Fahrwerk.

3. Luftfahrzeugbaugruppe nach Anspruch 1 oder 2, wobei der mindestens eine Treibstofftank (11'), der als ein Druckbehälter zur Aufnahme von Flüssigwasserstoff ausgelegt ist,
- mittels mindestens eines von dem einen oder den mehreren Halteseilen (14) mit einem weiteren Treibstofftank (11) verbunden ist, der als ein Druckbehälter zur Aufnahme von Flüssigwasserstoff ausgelegt ist und in der Luftfahrzeugbaugruppe umfasst ist; und/oder
- mittels mindestens eines von dem einen oder den mehreren Halteseilen (13, 15) mit einer Strukturkomponente (17, 16) verbunden ist, die in der Luftfahrzeugbaugruppe umfasst ist.

4. Luftfahrzeugbaugruppe nach einem der Ansprüche 1 bis 3, wobei mindestens eines von dem einen oder den mehreren Halteseilen innerhalb einer in der Luftfahrzeugbaugruppe umfassten Schale zumindest teilweise unverhüllt ist, d. h. ohne Ummantelung freiliegt.

5. Luftfahrzeugbaugruppe nach einem der vorhergehenden Ansprüche, wobei eine Verbindung der zwei oder mehr Luftfahrzeugkomponenten (11, 11', 12, 16) miteinander neben dem einen oder den mehreren Halteseilen (13, 13', 14, 14', 15, 15') mindestens ein Befestigungselement (13a, 13'a, 13'b, 14'a, 14'b, 15b, 15'a, 15'b) umfasst, das an einer oder an mehreren der Luftfahrzeugkomponenten angebracht ist.

6. Luftfahrzeugbaugruppe nach einem der vorhergehenden Ansprüche, wobei mindestens eines der Halteseile (13, 13', 14, 14', 15, 15') zumindest teilweise aus Polymerfasern, wie z. B. Aramiden oder Polyethylen, Kohlenstofffasern, wie z. B. Kevlar, oder anorganischen Fasern, wie Glas oder Keramik, hergestellt ist.

7. Luftfahrzeug, das eine Luftfahrzeugbaugruppe (100, 100') nach einem der vorhergehenden Ansprüche umfasst.

## Revendications

1. Ensemble d'aéronef (100) comprenant deux ou plusieurs composants d'aéronef (11, 11', 16, 17) qui sont raccordés les uns aux autres au moyen d'un ou plusieurs câble(s) d'attache d'aéronef captif (13, 13', 14, 14', 15, 15') configurés pour limiter une dérive des composants d'aéronef (11, 11', 16, 17) en cas de rupture de l'ensemble d'aéronef, dans lequel les au moins deux composants d'aéronef comprennent au moins un réservoir de carburant (11, 11'),
**caractérisé en ce que**:
au moins un réservoir de carburant est configuré comme un réservoir sous pression pour contenir de l'hydrogène liquide,
au moins un d'un ou plusieurs câble(s) d'attache d'aéronef captif (13, 13', 14, 14', 15, 15') est disposé de manière à être lâche lorsque l'ensemble d'aéronef est intact.

2. Ensemble d'aéronef selon la revendication 1, dans lequel au moins deux composants d'aéronef comprennent
- au moins un composant structurel (16, 17) et/ou
- au moins une cloison étanche (12) et/ou
- au moins un mât de moteur et/ou
- au moins un train d'atterrissage.

3. Ensemble d'aéronef selon les revendications 1 ou 2, dans lequel au moins un réservoir de carburant (11'), configuré comme un réservoir sous pression pour contenir de l'hydrogène liquide,
- est raccordé, au moyen d'au moins un d'un ou plusieurs câble(s) d'attache d'aéronef captif (14), à un réservoir de carburant supplémentaire (11) configuré comme un réservoir sous pression pour contenir de l'hydrogène liquide et faisant partie de l'ensemble d'aéronef ; et/ou
- est raccordé, au moyen d'au moins un d'un ou plusieurs câble(s) d'attache d'aéronef captif (13, 15), à un composant structurel (17, 16) faisant partie de l'ensemble d'aéronef.

4. Ensemble d'aéronef selon une des revendications 1 à 3, dans lequel, à l'intérieur d'une coque constituée par l'ensemble d'aéronef, au moins un d'un ou plusieurs câble(s) d'attache d'aéronef captif est au moins partiellement nu, c'est-à-dire exposé sans gaine.

5. Ensemble d'aéronef selon une des revendications précédentes, dans lequel une liaison entre deux ou plusieurs composants d'aéronef (11, 11', 12, 16) comprend, outre un ou plusieurs câble(s) d'attache d'aéronef captif (13, 13', 14, 14', 15, 15'), au moins un élément de fixation (13a, 13'a, 13'b, 14'a, 14'b, 15b, 15'a, 15'b) fixé à un ou plusieurs des composants d'aéronef.

6. Ensemble d'aéronef selon une des revendications précédentes, dans lequel au moins un des câble(s) d'attache d'aéronef captif (13, 13', 14, 14', 15, 15') est au moins partiellement constitué de fibres polymères, telles que des aramides ou du polyéthylène, de fibres de carbone, telles que du Kevlar, ou de fibres inorganiques telles que du verre ou de la céramique.

7. Aéronef comprenant un ensemble d'aéronef (100, 100') selon une des revendications précédentes.
